# EUROPEAN PATENT SPECIFICATION

(11) **EP 0 540 339 B1**
(45) Date of publication and mention of the grant of the patent: **20.05.1998**
(21) Application number: 92309934.5
(22) Date of filing: 29.10.1992
(51) Int. Cl.: B60C 11/12

(54) **Pneumatic tire**
Luftreifen
Bandage pneumatique

(30) Priority: 01.11.1991 JP 287689/91; 01.11.1991 JP 288017/91; 11.11.1991 JP 294340/91; 11.11.1991 JP 294341/91; 04.06.1992 JP 144591/92; 04.06.1992 JP 144614/92
(43) Date of publication of application: 05.05.1993
(73) Proprietor: BRIDGESTONE CORPORATION, Tokyo 104 (JP)
(72) Inventor: Aoki, Namito, Kokubunji-shi, Tokyo (JP); Ichiki, Yasufumi, Kodaira-shi, Tokyo (JP); Tanabe, Chishiro, Kodaira-shi, Tokyo (JP)
(74) Representative: Godwin, Edgar James

(56) References cited:
- GB-A- 474 588
- US-A- 4 945 966
- US-A- 5 024 260
- PATENT ABSTRACTS OF JAPAN vol. 13, no. 083, (M-802) 27 February 1989; & JP-A- 63 279 903 ( TOYO TIRE&RUBBER CO. ) 17 November 1988 (YD )

## Description

The present invention relates to a pneumatic tire having blocks with sipes. In particular, the present invention relates to a pneumatic tire having blocks which each include a set of two sipes, a narrow region interposed between the sipes, and wide regions disposed respectively at both sides of the narrow region, beyond the sipes.

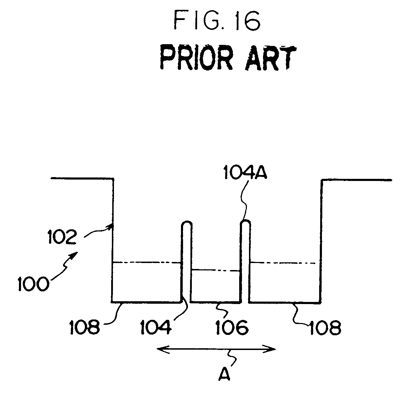

A pneumatic tire which has sipes in blocks so as to improve the running performance of the tire on ice- or snow-covered roads due to the edges of the sipes is known as a studless tire. Studless tires are used on vehicles which run on ice- or snow-covered roads. Fig. 16 is a sectional view cut along a circumferential direction of a conventional block of a studless tire.

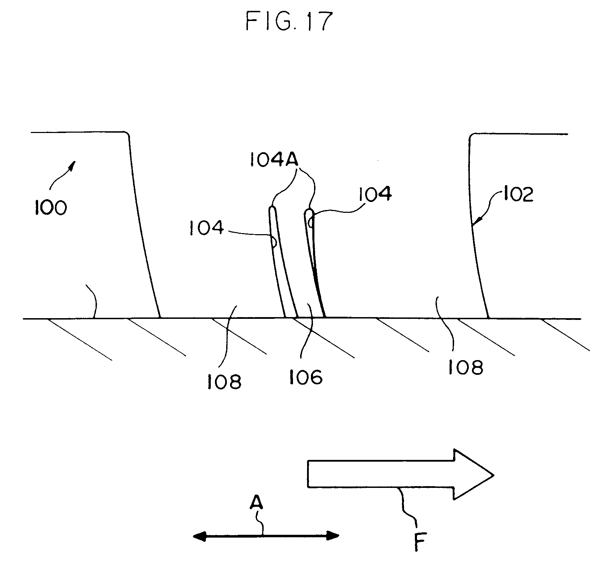

As shown in Fig. 16, a pair of sipes 104, which extend in the transverse direction of a pneumatic tire 100 (the direction orthogonal to the surface of the paper in Fig. 16), is provided in a block 102 in a central portion in the circumferential direction of the tire (the direction of arrow A in Fig. 16). The block 102 is divided by the pair of sipes 104 into a central region 106, which is defined between the sipes 104, and regions 108, which are located respectively at both sides of the central region 106. The width, in the circumferential direction of the tire, of the central region 106 is narrow compared with the width of the region 108. As a result, the narrow central region 106 (hereinafter referred to as the "narrow region") is less rigid than the region 108 (hereinafter referred to as the "wide region"). When the block 102 of the pneumatic tire 100 contacts a road surface and is subject to frictional force from the road surface in a direction tangent to the outer circumference of the tire, as shown in Fig. 17, the narrow region 106, having lower rigidity, is greatly deformed, and one of the sipes of the pair of sipes 104 closes while the other opens. As a result, the narrow region 106 is used as an edge, and the driving performance and braking performance improve as the coefficient of friction on ice increases.

As an example, Japanese Patent Application Laid-Open Nos. 63-279903 and 63-279904 disclose a pneumatic tire having blocks in which the ratio of the width of the narrow region to the width of wide region is less than or equal to 0.8.

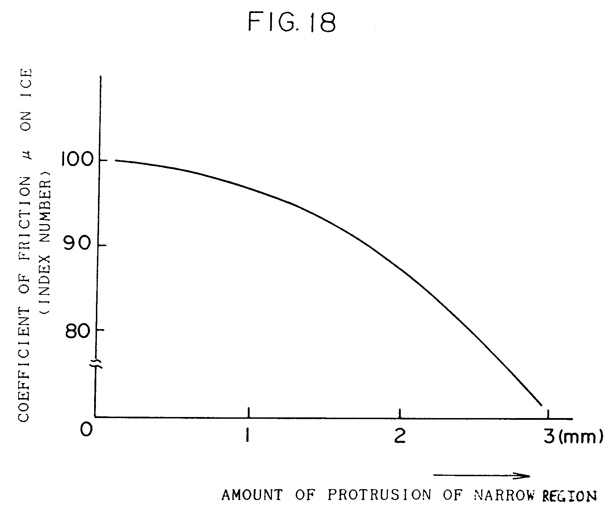

However, with regard to the ground contacting pressure within the block, as shown in Fig. 17, because the deformation of the narrow region 106 is large compared with that of the regions 108, the ground contacting pressure of the narrow region 106 is small. As a result, the narrow region 106 wears more slowly than the regions 108. As the wear progresses, the narrow region 106 protrudes further than the regions 108 (see the chain-dotted lines in Fig. 16). When the narrow region 106 protrudes further than the regions 108, the ground contacting pressure on the regions 108 decreases, and there is a drawback in that the on-ice performance of these regions 108 deteriorates. Fig. 18 is a graph illustrating the relation between the amount of protrusion of the narrow region and the coefficient of friction µ on ice. It is clear from the graph that as the amount of protrusion of the narrow region increases, the coefficient of friction µ on ice decreases. (When the surfaces of the narrow region 106 and the regions 108 are level, the coefficient of friction µ on ice is set to an index number of 100.) This data was obtained from an experiment carried out by the inventor of the present application.

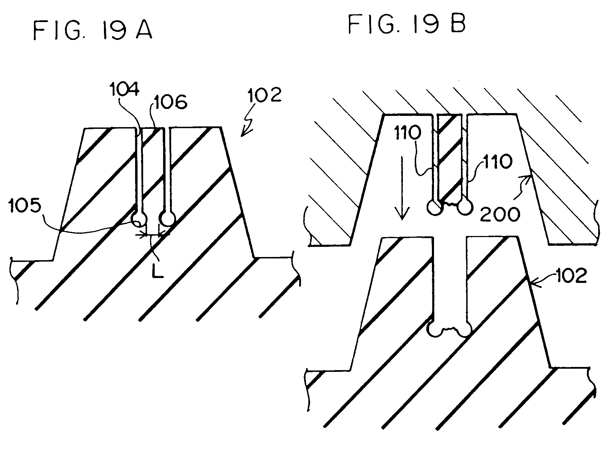

Further, because the groove width t of the sipe 104 is narrow, when the sipe 104 opens, it is easy for stress to concentrate on the bottom portion 104A of the sipe 104. It is therefore easy for cracks to form from the bottom portion 104A. In order to combat this drawback, forming an enlarged portion, having a circular cross-sectional configuration, at the bottom of a sipe is known. However, as illustrated in Fig. 19A, when two sipes are disposed so as to be adjacent to each other, if the interval L between enlarged portions 105 is too narrow, a drawback arises in that the rubber which should be between the sipes 104 is caught and remains between blades 110 of a vulcanization mold 200, as shown in Fig. 19B. Further, the rigidity of the narrow region 106 between the sipes 104 decreases, and the amount of shearing deformation, when the pneumatic tire is subject to a front-to-back force F during running, increases. As a result, a drawback arises in that it is easy for cracks to form from the bottom portion 105A.

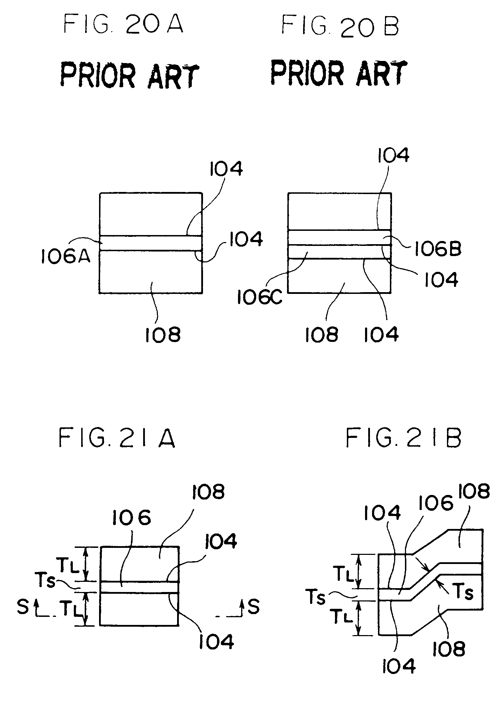

Figs. 20A and 20B are plan views of conventional blocks having at least two sipes. When side force is applied to narrow regions 106A, 106B, 106C due to cornering or the like, distortion due to shearing occurs, and cracks form in the bottoms of the sipes 104. If the cracks worsen, depending on the case, the narrow regions may break off.

There exist a variety of configurations of a plurality of sipes formed in a tire block. In the majority of cases, a pair of sipes is formed so as to be parallel. Examples are illustrated in Figs. 21A and 21B.

However, when a side force during running, such as that described above, acts upon tires having a variety of configurations of blocks having sipes, the bottom portion of the narrow region 106 is deformed by shearing force in the transverse direction. Cracks are generated, and, depending on the case, the narrow region 106 may break off.

Attention is also drawn to the disclosure of US-A-4945966.

It would therefore be desirable to be able to provide a pneumatic tire in which, as the tire becomes worn, the protruding of a narrow region interposed between sipes is prevented so that the on-ice running performance of the tire does not deteriorate.

It would also be desirable to be able to provide a pneumatic tire which has blocks with at least one pair of sipes and which can reliably and easily be removed from a vulcanization mold.

It would also be desirable to be able to provide a pneumatic tire having blocks with at least one pair of sipes in which the generation of cracks at the bottom of the sipes can be prevented.

It would also be desirable to be able to provide a pneumatic tire having a block pattern capable of preventing the formation of cracks in a narrow region defined by a pair of sipes and the breaking off of portions of the blocks.

The present invention provides a pneumatic tire comprising a plurality of blocks, each having a narrow region interposed between a set of two sipes which extend substantially transversely of the tire and wide regions disposed respectively at both sides of the narrow region, beyond the sipes, the average distance H2 from a tire tread surface of the narrow region to the bottom of each sipe being less than the average distance H1 from a tire tread surface of the adjacent wide region to the bottom of the sipe, and wherein an expanded portion is provided at the bottom of each sipe. By making H2 shorter than H1, as the tire contacts the ground when it rotates, due to the difference between the distance from the center of rotation of the tire to the tread surface of the narrow region and the distance from the center of rotation of the tire to the tread surfaces of the wide regions, there are cases in which the narrow region slidingly contacts the road surface and cases in which the narrow region does not contact the road surface. In the former case, the narrow region wears more quickly than the wide regions due to the narrow regions slidingly contacting the road surface. As a result, even when the block becomes worn, there is no protruding of only the narrow region. In the latter case (no contact), if, for example, H2<<H1, the narrow region does not contact the road surface from the initial stages of wear of the block to the intermediate stages thereof. Therefore, the narrow region does not protrude compared with the wide regions. After the intermediate stages of wear of the block, H2 is relatively small. Therefore, the rigidity of the narrow region is not as small as that of the wide regions. As a result, there is no protruding of only the narrow region. Accordingly, in either of these cases, by making H2 smaller than H1, sufficient running performance is maintained until the final stages of wear. It is preferable that H2/H1 is greater than or equal to 0.55 so that the edge effect of the sipes is exhibited for a longer period of time. When H2/H1 is less than 0.55, because time is required for the tread surface of the narrow region to contact the road surface as the tire becomes worn, the edge effect of the sipes is exhibited for a short time. When H2/H1 is greater than or equal to 1, the protruding of the narrow region cannot be prevented. It is especially preferable that H2/H1 satisfies 0.6≦H2/H1≦0.85.

Expanded portions are formed respectively at bottom portions of the sipes and the ratio L/TS of the shortest distance L between the expanded portions to the average length TS of the narrow region in the circumferential direction of the tire satisfies 0.7≦L/TS≦1.5.

By providing the expanded portions at the bottom portions of the sipes, the stress applied to the bottom portions when the sipes open is dispersed, and the formation of cracks from the bottom portions can be prevented. By setting the ratio of the shortest distance L in the circumferential direction of the tire between the expanded portions of the two sipes to the average length TS of the narrow region in the circumferential direction of the tire within a range of 0.7≦ L/TS≦ 1.5, deterioration of the rigidity of a base portion of the narrow region interposed between the two sipes of the block is suppressed. Therefore, when the pneumatic tire is removed from the vulcanization mold used to form the pneumatic tire, the narrow region is not caught and does not remain between blades of the vulcanization mold which are used to form the sipes. If the ratio L/TS is less than 0.7, the strength of the base portion of the narrow region deteriorates. Therefore, when the pneumatic tire is removed from the vulcanization mold, the narrow region may be caught by and may remain between the blades which form the sipes. Further, because the rigidity of the narrow region decreases and shearing deformation due to front-to-back force during running becomes large, there is the fear that cracks may form from the bottom portions of the sipes. On the other hand, if the ratio L/TS is greater than 1.5, the rigidity of the wide regions decreases, and the inclination of the blades of the vulcanization mold which form the sipes increases. Therefore, it becomes difficult to remove the pneumatic tire from the vulcanization mold.

It is preferable that the relation between the shortest distance L between the enlarged portions and the depth D of the sipe is such that L/D = 0.1 to 0.8. It is even more preferable that L/D = 0.3 to 0.8. If L/D is less than 0.1, the rigidity of the narrow region decreases, and there is the fear that the narrow region will break off when the tire is removed from the vulcanization mold. If L/D is greater than 0.8, the narrow region may become too rigid, and there will not be a difference between the rigidities of the regions. The value of L should preferably be at least 1.0 mm, and 2.5 to 5.6 mm is especially preferable. It is preferable that the value of D is 7 to 15 mm.

With regard to the size of the block, in general, its length in the circumferential direction of the tire may be 17 to 40 mm and preferably 20 to 35 mm. The length in the axial direction may be 10 to 80 mm and preferably 15 to 50 mm. When the length in the axial direction is less than 10 mm, the rigidity of the block decreases, and traction on snow deteriorates. In addition, the rigidity of the narrow region decreases, and there is the fear that the narrow region will break off when the tire is removed from the vulcanization mold. If the length of the block in the axial direction of the tire is greater than 80 mm, the ground contacting pressure of the block decreases. Therefore, it is difficult for the edge effect to be exhibited.

It is preferable that the bottom portions of one set of sipes expand in convex shapes in directions away from each other. By forming the enlarged portions in this way, when the tire is removed from the vulcanization mold, the narrow region of the block is smoothly and reliably removed from the mold so that portions do not break off from the narrow region of the block of the manufactured tire.

In the pneumatic tire of the present invention, it is preferable that the ratio W2/W1 of the length W2 of the narrow region in the transverse direction of the tire to the length W1 of each wide region in the transverse direction of the tire is in the range from 0.50 to 0.95. When side force is applied to the tire due to cornering or the like, the shearing force acting on the end portions of the sipes can be greatly reduced by setting W2/W1 within the above-mentioned range. As a result, the number of cracks which form in the bottoms of the sipe end portions can be reduced, and the breaking off of portions of the narrow region can be prevented. When W2/W1 is greater than 0.95, a large shearing force may form in the sipe bottoms when side force is applied to the tire, and the narrow region may easily break off. On the other hand, when W2/W1 is less than 0.5, the coefficient of friction on ice decreases. Therefore, the purpose of providing the two or more sipes is lost.

In the pneumatic tire of the present invention, it is preferable that the length, in the circumferential direction of the tire, of at least one side end portion of the narrow region is longer than the length, in the circumferential direction of the tire, of a central portion of the narrow region. It is especially preferable that the relation between the length TS1, in the circumferential direction of the tire, of the central portion of the narrow region and the length TS2, in the circumferential direction of the tire, of a side end portion of the narrow region satisfies the condition 1.1≦TS2/TS1≦3. If TS2/TS1 is less than 1.1, rigidity of the narrow region in the transverse direction may be insufficient, and cracks may form easily in the end portions of the narrow region. If TS2/TS1 is greater than 3, rigidity of the narrow region in the circumferential direction may be too large. Therefore, the purpose of providing the plurality of sipes is lost, and the on-ice braking performance may be insufficient.

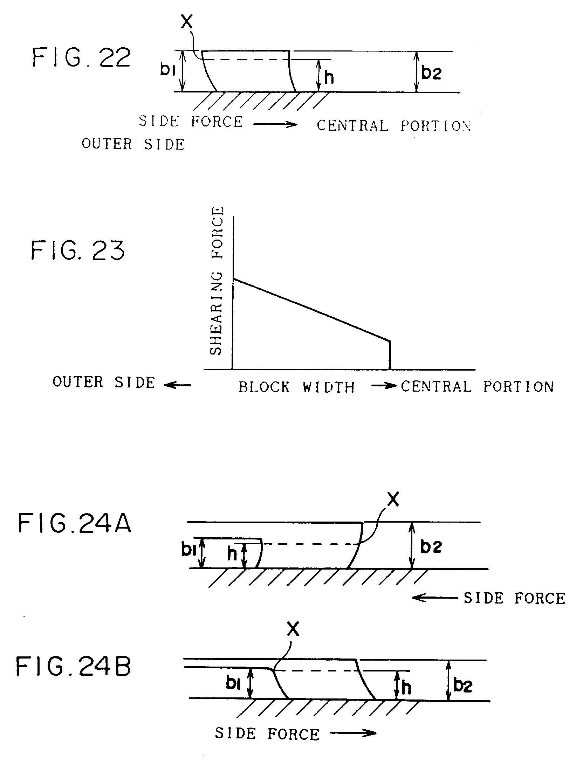

By using the above-described structure, the formation of cracks in the narrow region can be effectively prevented in the following two cases.
(1) In a case in which the depths of the main grooves adjacent the blocks are equal and the sipes are more shallow than the main grooves: when side force is input to the block while the vehicle is traveling, shearing force in the transverse direction of the block is generated and is concentrated on the end portions of the block. This state is illustrated in Fig. 22 which is a sectional view in the transverse direction of a tire having a block which is contacting the ground. In Fig. 22, "outer side" refers to an outside of the tire tread, and "central portion" refers to an inside of the tire tread. Fig. 23 illustrates how the shearing force varies with respect to positions in the transverse direction of the block when side force is input from the outside of the tire tread. As can be understood from this graph, the shearing force gradually decreases as it is directed toward the central portion of the tire tread. At the bottom portion of the narrow region as well (the portion represented by the broken lines), the shearing force concentrates at the end portion X. The length, in the circumferential direction of the tire, of the end portion of the narrow region is made longer than the length, in the circumferential direction of the tire, of the central portion of the narrow region in order to reinforce the portion on which the shearing force concentrates. In this way, the transverse rigidity of the end portion of the narrow region is increased, and deformation of the end portion is controlled. The concentration of stress on this region can thereby be decreased.
(2) In a case in which the depths of the grooves adjacent to the block are different and the sipes are deeper than either of the main grooves: Fig. 24A is a sectional view, in the transverse direction of the tire, of a block which is contacting the ground and illustrates this case. When side force is imparted from the deeper groove b2, the entire block, i.e., the block from the bottom portion of the deeper groove, deforms. Therefore, it is difficult for stress to concentrate on the bottom portion X of the end of the narrow region. On the other hand, if side force is imparted from the more narrow groove b1 as shown in Fig. 24B, stress concentrates on the bottom portion X of the end of the narrow region, and cracks are easily formed. The length, in the circumferential direction of the tire, of the end portion of the narrow region at which the groove is shallow is made larger than the length of the central portion of the narrow region, so that, as in above-described case (1), deformation of the land portion between the sipes can be controlled, and the concentration of stress on this region can be reduced.

It is preferable that the pneumatic tire of the present invention has a tire block pattern which is structured so that the narrow region of the block is aligned, in the transverse direction of the tire, with a region, which is more rigid than the narrow region, of another block which is adjacent to the block in the transverse direction of the tire. By farming this type of block pattern on a tire, even if an extreme frictional force is applied to the tire, the frictional force does not concentrate exclusively on the narrow regions. Therefore, the sipe does not open excessively, and cracks do not form in the bottom of the sipe. Further, even if side force is applied and a complex force, which mainly comprises a component in the transverse direction of the tire, is applied to the narrow region, the deformation of the narrow region is mitigated by the region which is adjacent to and is more rigid than the narrow region. The formation of cracks at, in particular, both end portions of the narrow region can thereby be prevented. Accordingly, using the above-described structure, the formation of cracks in the narrow region can be effectively prevented. Further, the breaking off of the narrow region which result from cracks can be prevented.

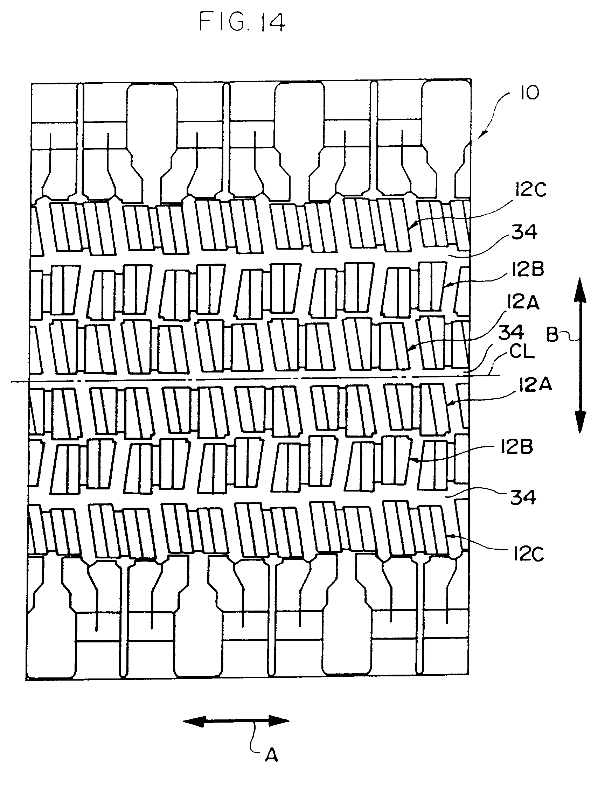

In pneumatic tires having a variety of block structures such as those described above, it is preferable to provide auxiliary sipes respectively in the wide regions in addition to the set of two sipes (main sipes) which divide the block into the narrow region and the wide regions. It is preferable that the auxiliary sipes are provided so as to extend substantially parallel to the main sipes as illustrated in blocks 12B and 12C of Fig. 14.

When the tire is new, the tread surface is smooth. If the tire is not ridden on to a certain extent, roughness of the surface does not appear. In particular, when the depths of the sipes are such that H2<H1, the narrow region is lower than the wide regions in the initial stages of wear of the tire. The coefficient of friction on ice is reduced due to a reduction in the ground contacting surface area of the block or a reduction in the ground contacting pressure. Further, in regard to the sectional configuration of the tread, the shoulder portion is tapered and the angle of the groove is such that the width of the groove becomes wider toward the opening portion. Therefore, the ground contacting surface area when the tire is new is less than that when the tire is worn. When foamed rubber is used in the tread surface portion of the new tire, the tread surface portion which is forced into contact with the mold during vulcanization barely bubbles. Therefore, the roughness of the tire surface is markedly insufficient. The inventor of the present invention has discovered that, in this type of case, the on-ice performance of the tire can be improved by providing auxiliary sipes which extend substantially parallel to the main sipes.

Further, the configuration of the main sipes and the auxiliary sipes is not limited to straight lines. Zigzag configurations, undulated configurations and the like may be employed.

The circumferential direction sipes may be provided in all of the blocks on the tread, or may be provided in the blocks of only one section of the tread, e.g., the shoulder portion.

The invention will be described further, by way of example only, with reference to the accompanying drawings, in which:
Fig. 1 is a perspective view illustrating a portion of a block pattern of a pneumatic tire of an embodiment 1-1.
Fig. 2 is a perspective view illustrating a block, which has two sets of sipes, of a pneumatic tire of an embodiment 1-2.
Fig. 3 is a perspective view illustrating a block of a pneumatic tire of an embodiment 1-3.
Fig. 4 is a perspective view illustrating a block of a pneumatic tire of an embodiment 1-4.
Fig. 5 is a perspective view illustrating a block of a pneumatic tire of an embodiment 1-5.
Fig. 6 illustrates a variation of a block of a pneumatic tire, wherein sipes are bent at a middle of the block.
Fig. 7 illustrates a variation of a block of a pneumatic tire, wherein the block has two sets of sipes.
Fig. 8 illustrates a variation of a block of a pneumatic tire of an embodiment of the present invention, wherein expanded portions are formed respectively at bottoms of sipes.
Fig. 9 illustrates an example of a block pattern of a pneumatic tire.
Fig. 10 illustrates another example of a block pattern of a pneumatic tire.
Fig. 11 illustrates another example of a block pattern of a pneumatic tire.
Fig. 12 illustrates an example of a tread structure of a pneumatic tire.
Fig. 13 is a sectional view illustrating a positional relationship of sipes within the block in Fig. 12 and a cap layer and a base layer.
Fig. 14 illustrates a tread pattern in accordance with an embodiment 1-4.
Fig. 15A is a plan view of a block illustrated in Fig. 14.
Fig. 15B is a plan view of another block illustrated in Fig. 14.
Fig. 15C is a plan view of another block illustrated in Fig. 14.
Fig. 16 is a sectional view, in a circumferential direction of a tire, of a tire having a conventional block.
Fig. 17 illustrates a state in which a narrow region and wide regions of the tire block illustrated in Fig. 16 are deformed when the tire block is subject to frictional force in a direction tangent to the outer circumference of the tire.
Fig. 18 is a graph illustrating the relation between the coefficient of friction on ice and the amount of protrusion of the narrow region.
Fig. 19A is a sectional view in the circumferential direction of the tire of a block when enlarged portions are respectively provided at the bottoms of a pair of sipes.
Fig. 19B illustrates a state in which the rubber of the narrow region remains in the mold when the block shown in Fig. 19A is removed from the mold.
Fig. 20A and Fig. 20B are plan views of a block of a conventional pneumatic tire, wherein the block has at least two sipes.
Fig. 21A and Fig. 21B are plan views of a block of a conventional pneumatic tire, wherein the block has one set of two parallel sipes.
Fig. 22 is a view illustrating deformation of a block when side force is applied to a tire tread in which depths of main grooves adjacent the block are equal.
Fig. 23 is a graph illustrating the magnitude of a shearing force with respect to positions in the transverse direction of the block.
Fig. 24A and Fig. 24B are views illustrating deformation of a block when side force is applied to a tire tread in which depths of main grooves adjacent the block are different, wherein Fig. 24A illustrates a case in which the side force is applied from the deeper main groove and Fig. 24B illustrates a case in which the side force is applied from the shallower main groove.
Fig. 25A illustrates an example of a planar configuration of a block of a pneumatic tire in which the ratio W2/W1 of the length W2 of a narrow region in the transverse direction of the tire and the length W1 of wide regions in the transverse direction of the tire is such that 0.5≦W2/W1≦0.95.
Fig. 25B illustrates another example of a planar configuration of a block of a pneumatic tire in which the length, in the circumferential direction of the tire, of at least one side end portion of a narrow region is longer than the length, in the circumferential direction of the tire, of a central portion of the narrow region.

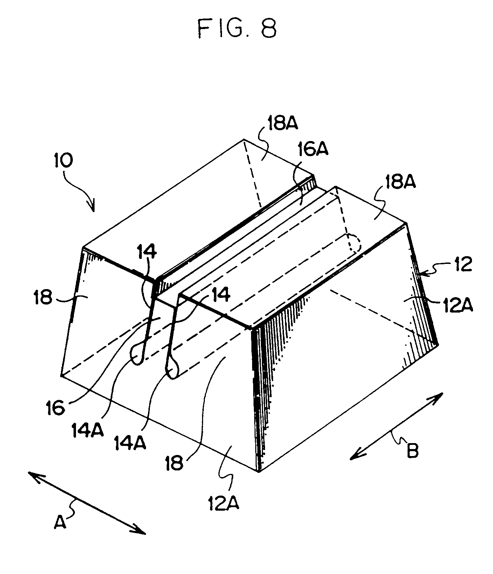

It will be appreciated that only the embodiment of Fig. 8 has expanded portions at the bottom of each sipe, as required by the present invention.

### Embodiment 1-1

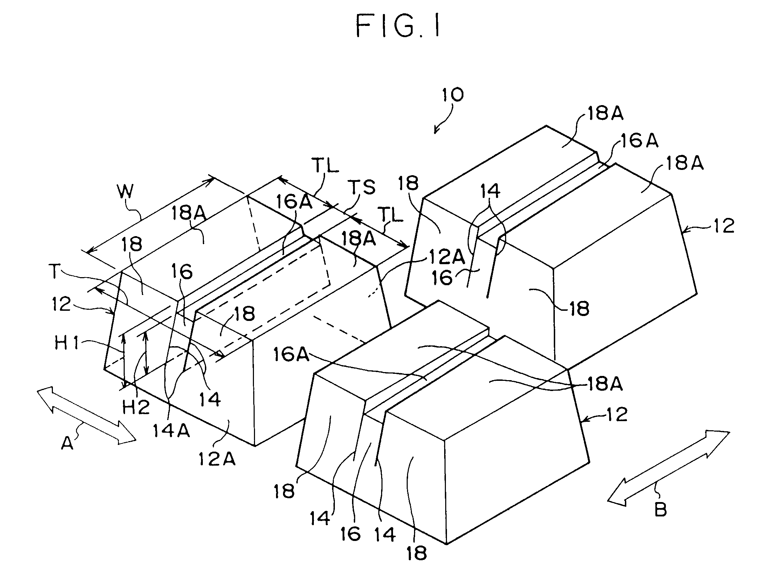

Embodiment 1-1 will be described in accordance with Fig. 1.

A pneumatic tire of the present embodiment has a block pattern, a portion of which is illustrated in Fig. 1. A block 12 is formed as a substantially square column. In this example, the dimension T of the block 12 in the circumferential direction of the tire is 30.5 mm, and the dimension W of the block 12 in the transverse direction of the tire (the direction of arrow B in Fig. 1) is 30 mm. The dimensions T and W are not limited to these values. However, the dimension T of the block 12 in the circumferential direction of the tire (the direction of arrow A in Fig. 1) is preferably set so that 15 mm≦T≦40 mm, and more preferably set so that 20 mm≦T≦35 mm. When the dimension T of the block 12 in the circumferential direction of the tire exceeds 40 mm, the ground contacting pressure of the block 12 decreases as the length of the block 12 in the circumferential direction of the tire increases. Therefore, undesirable effects result as it becomes difficult to obtain the edge effect, and driving performance and braking performance deteriorate. On the other hand, when the dimension T in the circumferential direction of the tire is less than 15 mm, the rigidity of the block 12 becomes too small. This case as well results in undesirable effects as it becomes difficult to obtain the edge effect, and driving performance and braking performance deteriorate.

Two sipes 14, which extend in straight lines along the transverse direction of the tire, are formed as one group in the block 12. In this example, the groove width of the sipe 14 is 0.5 mm. The groove width of the sipe 14 is not particularly restricted, and is preferably less than or equal to 1 mm and more preferably less than or equal to 0.6 mm.

Both longitudinal direction end portions of the sipe 14 extend to side walls 12A on the sides of the block 12 in the transverse direction of the tire. The block 12 is divided in the circumferential direction of the tire into three regions by the sipes 14. The region interposed between the pair of sipes 14 is a narrow region 16. Wide regions 18 are respectively disposed at both sides, in the circumferential direction of the tire, of the narrow region 16, and are adjacent to the narrow region 16. In this example, the dimension TL of each wide region 18 in the circumferential direction of the tire is 13 mm, and the dimension TS of the narrow region 16 in the circumferential direction of the tire is 3.5 mm. The ratio TS/TL is approximately 0.27. The dimension TS is not particularly limited, but it is preferable that TS be in the range from 1.5 mm to 10 mm. It is especially preferable that TS be in the range from 2.5 mm to 7 mm.

In the present embodiment, the distance H1 from the bottom 14A of each sipe 14 to a tread surface 18A of the wide region 18 is 12 mm. The distance H2 from the bottom 14A of each sipe 14 to a tread surface 16A of the narrow region 16 is 10 mm. The distance H1 is not limited in particular, but it is preferable that H1 be set so that 7 mm≦H1≦15 mm. When the distance H1 is less than 7 mm, undesirable effects may result in that the depth of the sipe 14 is insufficient in the final stages of wear of the tire, and the difference in the rigidities of the narrow region 16 and the wide regions 18 becomes small. A distance H1 exceeding 15 mm is undesirable as the rigidity of the entire block 12 may be insufficient. In the present embodiment, the tread surface 16A of the narrow region 16 is planar and is parallel to the tread surfaces 18A of the wide regions 18.

By making H2 shorter than H1, as the tire contacts the ground when it rotates, due to the difference between the distance from the center of rotation of the tire to the tread surface of the narrow region and the distance from the center of rotation of the tire to the tread surface of the wide regions, there are cases in which the narrow region slidingly contacts the road surface and cases in which the narrow region does not contact the road surface. In the former case, the narrow region wears more quickly than the wide regions due to the narrow region slidingly contacting the road surface. As a result, even when the block becomes worn, there is no protruding of only the narrow region. In the latter case (no contact), if, for example, H2<<H1, the narrow region does not contact the road surface from the initial stages of wear of the block to the intermediate stages thereof. Therefore, the narrow region does not protrude compared with the wide regions. After the intermediate stages of wear of the block, H2 is relatively small. Therefore, the rigidity of the narrow region is not as small as that of the wide regions. As a result, there is no protruding of only the narrow region. Accordingly, in either of these cases, by making H2 smaller than H1, sufficient running performance is maintained until the final stages of wear.

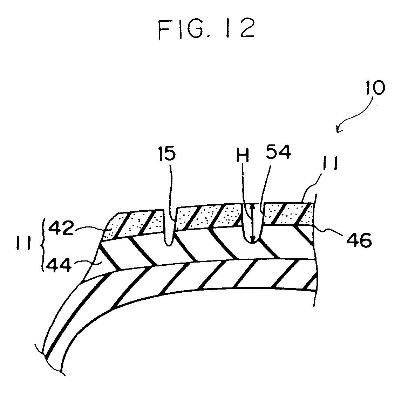

Fig. 12 illustrates an example of a tread portion of a pneumatic tire. Fig. 12 is a sectional view of a shoulder portion of the tread in the transverse direction of the tire. In order to simplify Fig. 12, detailed structures of the blocks are not shown. A tread 11 is formed of two types of rubber such that there are two layers in the direction of thickness of the tread 11. A foamed rubber having independent bubbles is used for the cap side, i.e., an upper layer 42 (the layer on the road surface side), which contacts the road surface. An ordinary rubber, which has low exothermic character and which is not foamed, is used for the base side, i.e., a lower layer 44.

In the present embodiment, the ratio of the volume which the foamed rubber of the upper layer 42 occupies, to the entire volume of the tread 11, is 26%. A boundary surface 46 of the upper layer 42 and the lower layer 44 is set at approximately the middle of the depth of a main groove 54 which is formed in the circumferential direction of the tire. In the present embodiment, the foaming ratio Vs of the foamed rubber of the upper layer 42 is 18%, the average bubble diameter is 25 µm, and the hardness is 64° . The hardness of the rubber of the lower layer 44 is 62° .

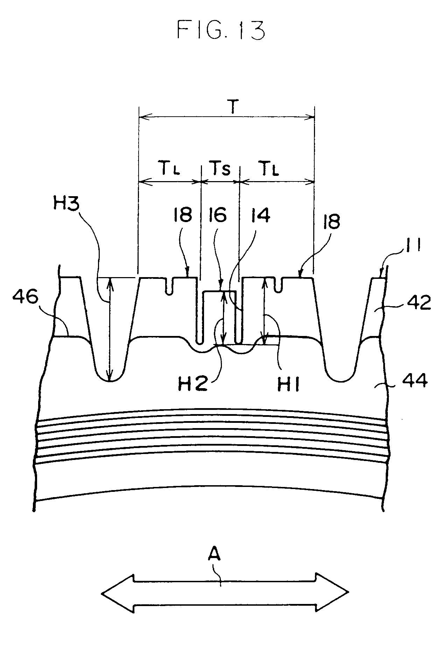

Fig. 13 is a sectional view, in the circumferential direction of the tire, of the block 12 shown in Fig. 12. Fig. 13 illustrates the arrangement of the sipes within the block 12. As can be seen in the drawing, the sipes 14 are formed in the cap layer 42, and it is preferable that the bottoms of the sipes exist in a vicinity of the boundary between the cap layer 42 and the base layer 44. The tread structure is not limited to the structure illustrated in Figs. 12 and 13, and a variety of materials and structures may be used.

### Embodiment 1-2

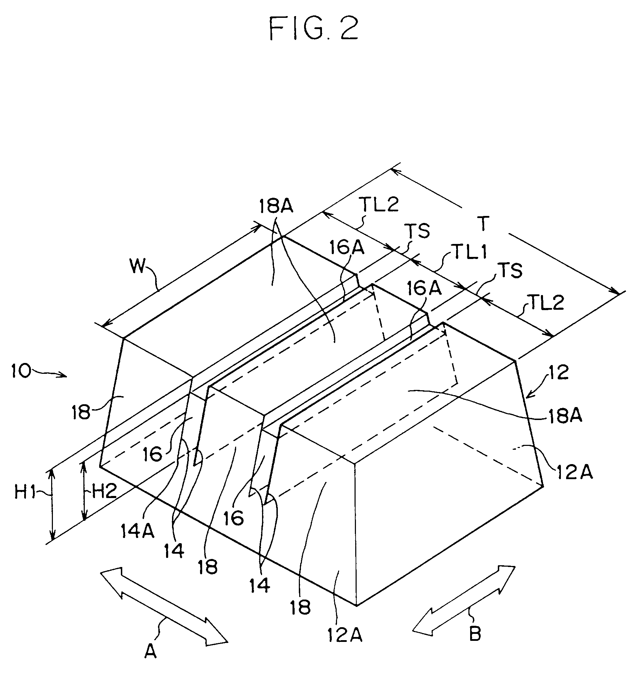

Another embodiment of a block used in a pneumatic tire will be explained in accordance with Fig. 2. Parts which are the same as those of embodiment 1-1 are denoted by the same reference numerals, and description thereof is omitted.

As shown in Fig. 2, in the present embodiment, two sets of sipes 14 are provided in the block 12 so as to be separated by a predetermined interval in the circumferential direction of the tire (the direction of arrow A in Fig. 2). Each set comprises a pair of sipes 14 which extend in straight lines in the transverse direction of the tire (the direction of arrow B in Fig. 2). The distance H1 from the bottom 14A of each sipe 14 to the tread surface 18A of the wide region 18 is 12 mm. The distance H2 from the bottom 14A of each sipe 14 to the tread surface 16A of the narrow region 16 is 10 mm. The ratio H2/H1 is 0.83. The dimension W of the block 12 in the transverse direction of the tire is 30 mm, and the dimension T of the block 12 in the circumferential direction of the tire is 40 mm. The dimension TL2, in the circumferential direction of the tire, of the outer wide regions 18 is 11 mm; these wide regions 18 are located at both sides of the block 12 in the circumferential direction of the tire (the direction of arrow B in Fig. 2). The dimension TL1, in the circumferential direction of the tire, of the middle wide region 18, which is located at a central portion in the circumferential direction of the tire of the block 12 and which is interposed between the two sets of sipes 14, is 10 mm. The dimension TS, in the circumferential direction of the tire, of the narrow region 16 is 3 mm. In this example, as in embodiment 1-1, even if the block 12 of the pneumatic tire 10 is worn, the narrow regions 16 are controlled so as not to protrude more than the wide regions 18 toward the radially outward side of the tire, so that the maximum edge effect can be maintained until the final stages of wear.

### Embodiment 1-3

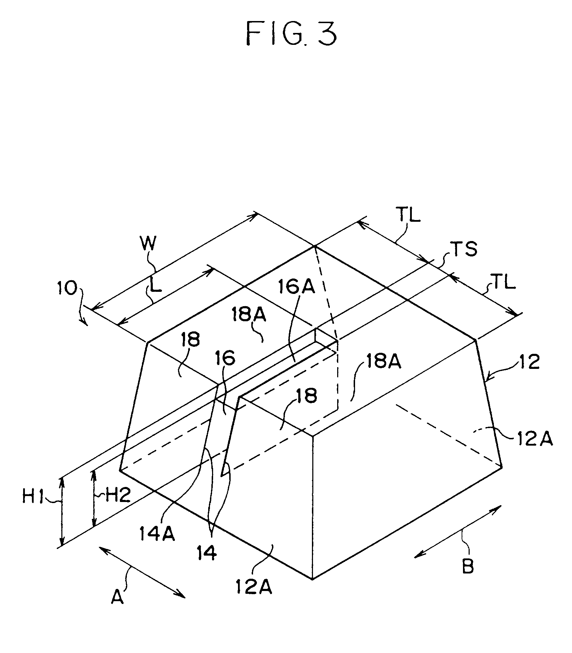

Next, embodiment 1-3 of a pneumatic tire will be described in accordance with Fig. 3. Parts which are the same as those of embodiment 1-1 are denoted by the same reference numerals, and description thereof is omitted.

As shown in Fig. 3, the present embodiment differs from embodiment 1-1 in that the one ends of the sipes 14 extend to one of the side walls 12A of the block 12, but the other ends of the sipes 14 do not extend to the other side wall 12A. In this example, the dimension W of the block 12 in the transverse direction of the tire is 30 mm, and the entire length L of the sipe 14 is 20 mm. It is not necessary for the pair of sipes 14 to extend from one of the side walls 12A to the other side wall 12A, but it is preferable that the entire length L of each of the pair of sipes 14 is greater than or equal to 50% of the dimension W of the block 12 in the transverse direction of the tire. If the entire length L of the sipe 14 is less than 50% of the dimension W of the block 12 in the transverse direction of the tire, the edge effect may not be achieved by the sipe 14. All of the other dimensions of the block 12 are the same as those in embodiment 1-1. In the present embodiment as well, even if the block 12 of the pneumatic tire 10 becomes worn as in embodiment 1-1, the narrow region 16 is controlled so as not to protrude more than the wide regions 18 toward the radially outward side of the tire, so that the maximum edge effect can be maintained until the final stages of wear.

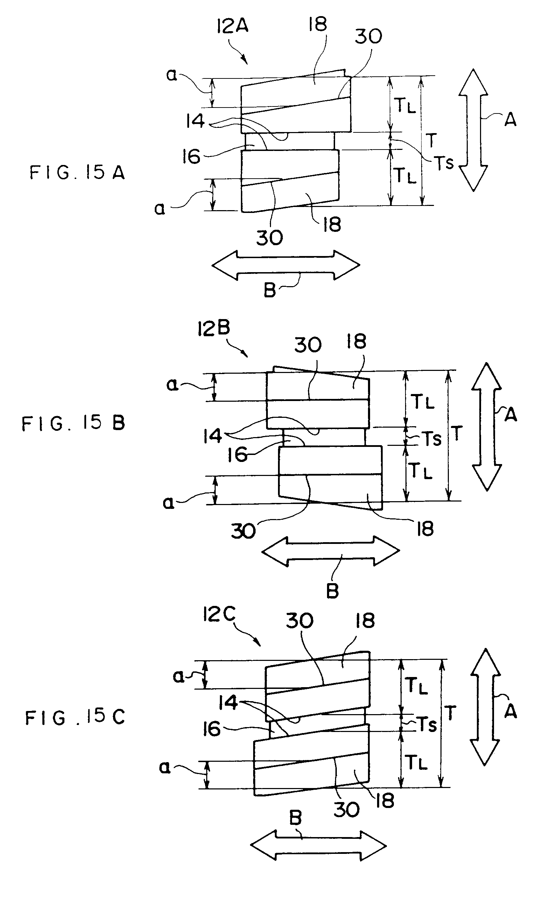

Next, an embodiment 1-4 will be described in accordance with Figs. 14 and 15. Parts which are the same as those of the embodiment 1-1 are denoted by the same reference numerals, and description thereof is omitted.

Fig. 14 illustrates an example of a block pattern of a pneumatic tire. As shown in Fig. 14, the pneumatic tire 10 has blocks of three different configurations. The blocks are, from the equatorial plane CL side of the tire to the shoulder side, blocks 12A, blocks 12B, and blocks 12C.

As can be seen from Fig. 15A, in the block 12A, the wide regions 18, which are the end portions of the block 12A in the circumferential direction of the tire, incline upward and to the right with respect to the transverse direction of the tire (the direction of arrow B in Fig. 15A). The longitudinal direction of the sipe 14 is the transverse direction of the tire (the direction of arrow B).

As illustrated in Fig. 15B, in the block 12B, the wide regions 18, which are the end portions of the block 12B in the circumferential direction of the tire, incline upward and to the left with respect to the transverse direction of the tire (the direction of arrow B). The longitudinal direction of the sipe 14 is the transverse direction of the tire.

As shown in Fig. 15C, in the block 12C, the wide regions 18, which are the end portions of the block 12C in the circumferential direction of the tire, incline upward and to the right with respect to the transverse direction of the tire. The longitudinal direction of the sipe 14 is inclined upward and to the right with respect to the transverse direction of the tire.

An auxiliary sipe 30 is formed in each of the wide regions 18 of the block 12A so as to be parallel to the end portions of the block 12A in the circumferential direction of the tire. An auxiliary sipe 30 is formed in each of the wide regions 18 in the block 12B so as to be parallel to the sipes 14. An auxiliary sipe 30 is formed in each of the wide regions 18 of the block 12C so as to be parallel to the end portions of the block 12C in the circumferential direction of the tire.

The dimension T in the circumferential direction of the tire of the respective blocks 12A, 12B, 12C of the present embodiment is on average 30.5 mm. The dimension W in the transverse direction of the tire of the respective blocks 12A, 12B, 12C is on average 30 mm. Further, the dimension TL in the circumferential direction of the tire of the wide regions 18 of the respective blocks 12A, 12B, 12C is on average 13 mm, whereas the dimension TS in the circumferential direction of the tire of the narrow region 16 is on average 3.5 mm. Further, in the respective blocks 12A, 12B, 12C, the dimension H1 is 11 mm, the dimension H2 is 8 mm, the depth h of the auxiliary sipe 30 is 3 mm, and the average distance a between the auxiliary sipe 30 and the edge of the block is 6.25 mm.

In the pneumatic tire of embodiment 1-4, the distance from the tread surface of the narrow region to the center of rotation of the tire is different from the distance from the tread surface of the wide region to the center of rotation of the tire. Further, the block generally has a trapezoidal configuration and is tapered at the shoulder portions. Therefore, when the tire is new, the ground contacting surface area and the ground contacting pressure are small compared with those from the intermediate stages to the final stages of wear of the tire. However, the edge effects of the auxiliary sipes 30 provided in the blocks 12A, 12B, 12C can compensate for the insufficient ground contacting surface area from the time when the tire is new to the first stages of wear. The edge effects of the sipes 14 can be obtained, and also good braking performance and good driving performance can be obtained on ice-covered or wet road surfaces.

As the tread 11 wears due to use, the auxiliary sipes 30 gradually disappear. However, at the time when the auxiliary sipes 30 are disappearing, the ground contacting surface area of the tread 11 is gradually increasing. Therefore, good braking performance and good driving performance on ice-covered or wet road surfaces can be obtained until the final stages of wear due to the effect of the increase of the ground contacting surface area and due to the edge effect of the sipe 14.

In this way, in the pneumatic tire 10 of the present embodiment, the edge effect of the auxiliary sipes 30 compensates for the insufficient ground contacting surface area and insufficient ground contacting pressure from the time when the tire is new to the initial stages of wear. Constant, good driving performance and braking performance can thereby be obtained from the time when the tire is new to the final stages of wear of the tire.

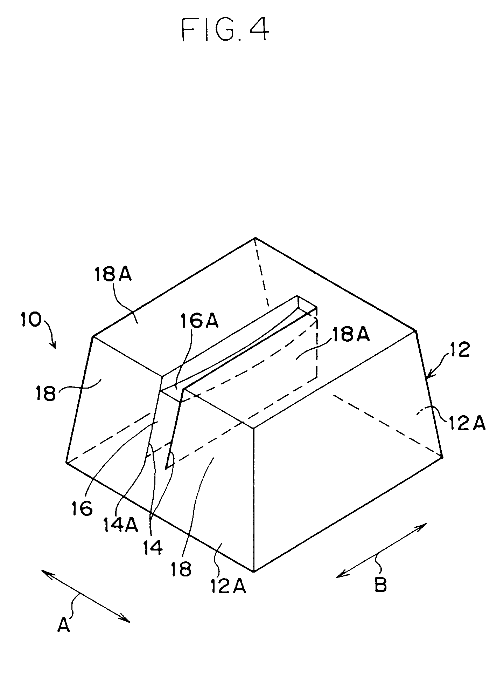

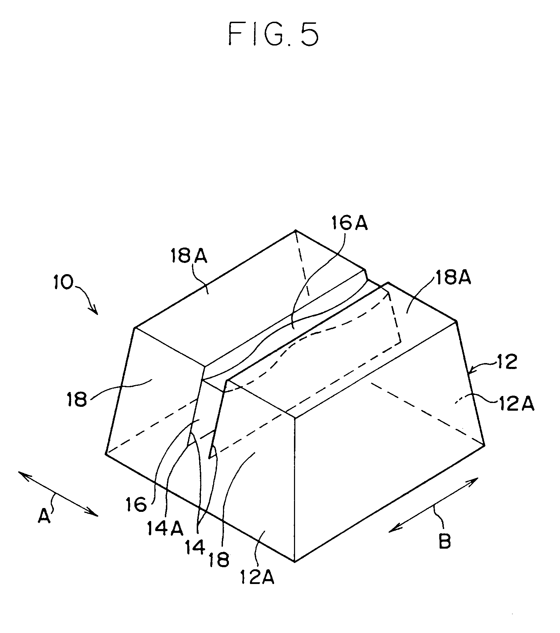

In the above-described embodiments, the tread surface 16A of the narrow region 16 and the tread surfaces 18A of the wide regions 18 are parallel and plane. However, the tread surface 16A of the narrow region 16 may be formed, as is illustrated in Fig. 4, such that the tread surface 16A is sunk in an arc-shaped configuration toward the center of rotation of the tire. Alternatively, the tread surface 16A may be wave-shaped as shown in Fig. 5.

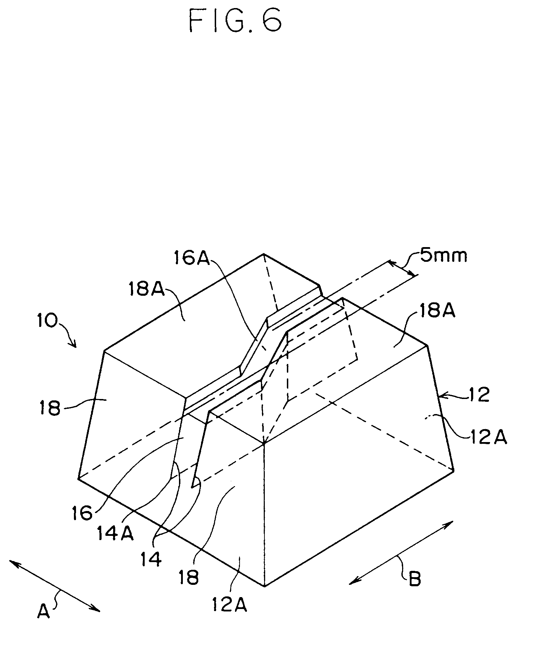

Further, in embodiments 1-1 to 1-3, the longitudinal directions of the sipes 14 are straight lines. However, as shown in Fig. 6, longitudinally intermediate portions of the sipes 14 may be bent so that the longitudinal directions of the sipes 14 on one side of the center are offset, in the circumferential direction of the block, from the longitudinal directions of the sipes 14 on the other side of the center. (In the embodiment illustrated in Fig. 6, the sipes 14 are offset by 5 mm in the circumferential direction of the block.) Further, the sipes 14 may be provided so as to form wave shapes or curves when the tread is viewed from above. (These configurations are not shown in the drawings.)

In the above-described embodiments, the pair of sipes 14 is parallel, but it suffices if the sipes 14 are not parallel.

In embodiments 1-1 to 1-3, the pair of sipes 14 is arranged so as to extend in the transverse direction of the tire. However, the longitudinal directions of the pair of sipes 14 may be set within a range of 0° to 45° with respect to the transverse direction of the tire.

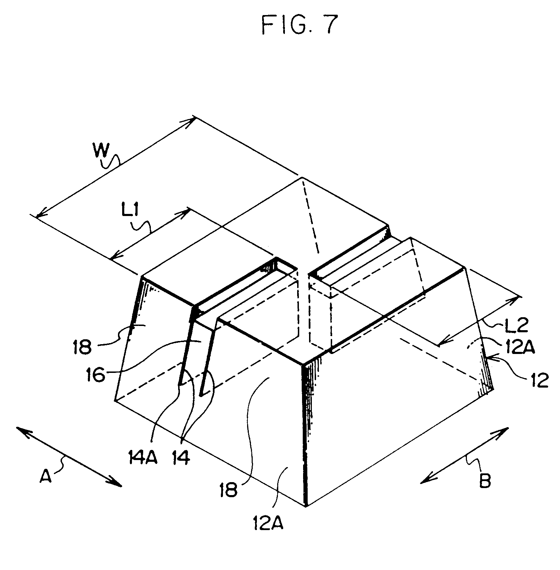

In embodiment 1-3 (see Fig. 3), one set of a pair of the sipes 14 is provided per block 12. However, two or more sets may be provided per block 12. In this case, it is preferable that the entire length L of the pair of sipes 14 (L1+L2) is greater than or equal to 50% of the dimension W of the block 12 in the transverse direction of the tire (the direction of arrow B in Fig. 7).

As illustrated in Fig. 8, according to the present invention, the bottom portions 14A of the sipes 14 are formed so as to have substantially circular cross sections which swell in directions away from each other. Due to this structure, stress does not concentrate at the bottom portion 14A when the sipe 14 opens. Consequently, the formation of cracks in the bottom portions 14A is prevented.

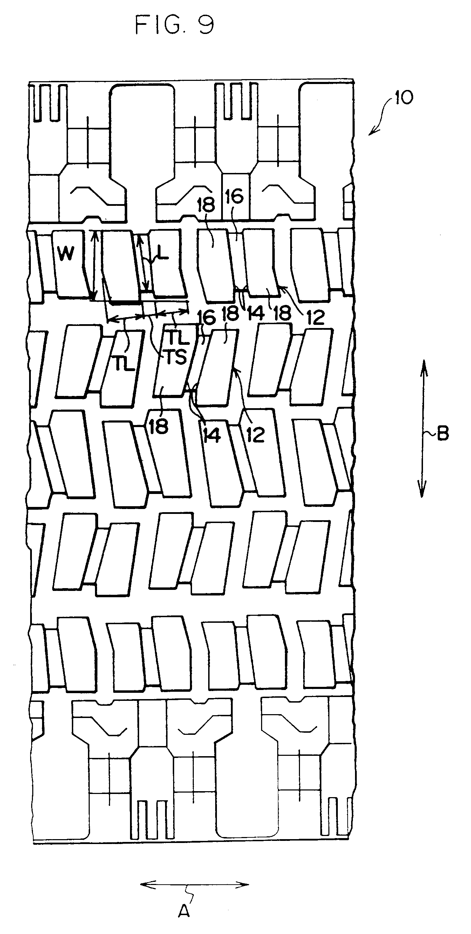

In embodiment 1-1 of the present invention, if H2<H1, it is not necessary that the block be shaped as a square column. As shown in Fig. 9, the block 12 may be formed such that the longitudinal dimension L of the narrow region 16 is smaller than the average dimension W in the longitudinal direction of the wide regions 18. For example, when the longitudinal dimension of the narrow region 16 is 50% to 95% of the longitudinal dimension of the wide region 18, cracks, which are easily formed in the transverse direction end portions (main groove openings in the circumferential direction) of the bottom of the sipes by side force input, can be prevented because, in this structure, the wide regions 18 bear the input and the burden placed on the narrow region 16 is decreased.

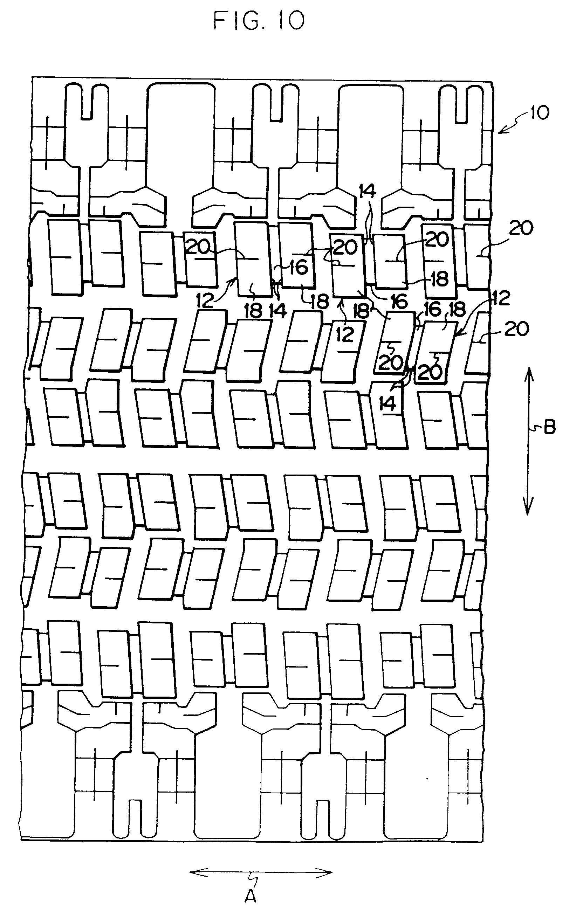

In embodiment 1-1, if H2<H1, as shown in Fig. 10, circumferential sipes 20, which extend in the circumferential direction of the tire (the direction of arrow A in Fig. 10), may be formed at both sides in the circumferential direction of the tire of the block 12, in addition to the pair of sipes 14. It is preferable that the circumferential sipes 20 be provided in at least one of the sides of the block 12 in the circumferential direction of the tire and that the circumferential sipes 20 be inclined from 0° to 45° with respect to the circumferential direction. Due to this structure, performance of the tire with respect to horizontal sliding improves.

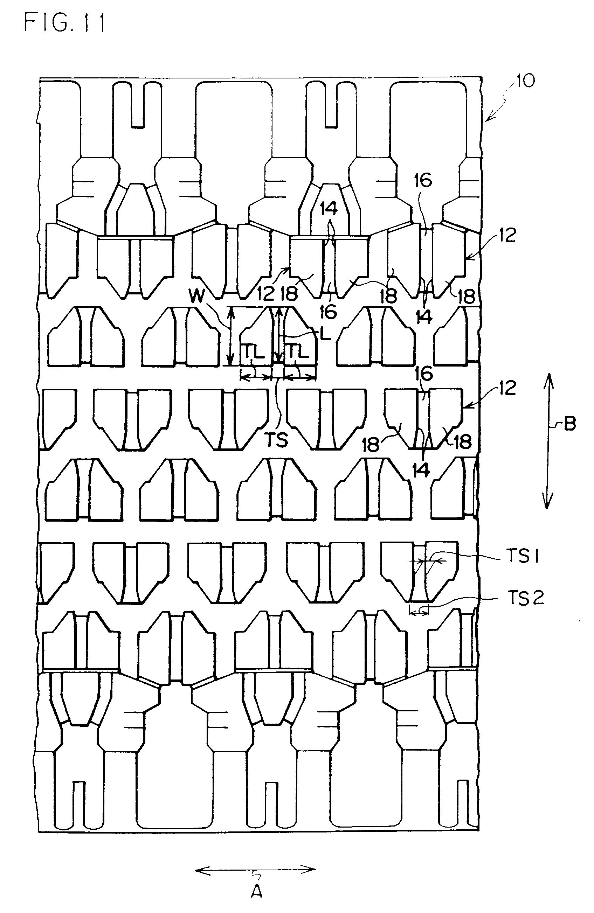

In the above embodiment, the block 12 has a substantially rectangular configuration. However, if the relation H2<H1 of embodiment 1-1 of the present invention is satisfied, the block 12 may be formed as shown in Fig. 11 so as to have a trapezoidal shape as seen from above the tread. In Fig. 11, the length TS, in the circumferential direction of the tire, of the narrow region 16 of the block 12 is such that a length TS2 of one side end portion of the narrow region 16 is longer than a length TS1 of a central portion of the narrow region 16. By using this type of block configuration, the horizontal rigidity of the end portion (having the length TS2) of the narrow region 16 can be increased. This is particularly effective when a main groove on the side of the end portion having length TS2 is more shallow than a main groove on the side of the opposite end portion.

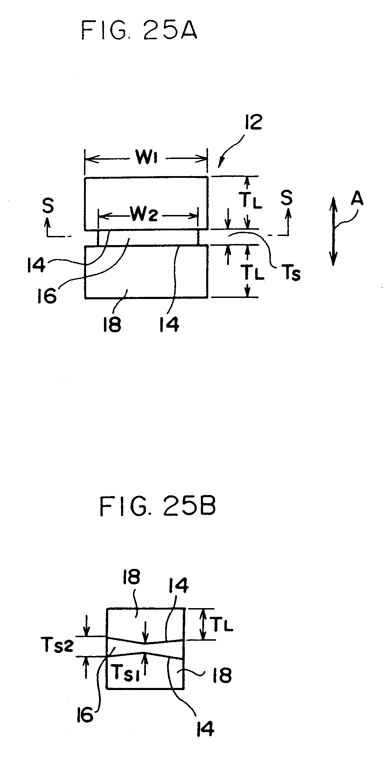

The block planar configuration illustrated in Fig. 25A, in which 0.50≦W2/W1≦0.95 is satisfied, can be used. Moreover, the block planar configuration shown in Fig. 25B, in which TS1<TS2 is satisfied, can be used.

The configuration of the block 12 is not particularly limited to the above-described shapes.

### Experimental Example

Table 1 shown below gives the results of an experiment that was performed using conventional pneumatic tires (the pneumatic tire illustrated in Fig. 16) and pneumatic radial tires of the type described above. Seven types of tires were filled to standard internal pressure and were placed, respectively, on all of the wheels of trucks (two doors, four wheels) having constant loads. The stopping distances on ice of the trucks when the tires were new and the stopping distances on ice when the trucks were driven so that the blocks were worn to 50% of the depths of the sipes were measured with respect to all of the types of tires. The results of this experiment are given in Table 1. In the table, the measured value of the stopping distance of the conventional pneumatic radial tire is 100. Smaller numbers indicate shorter stopping distances. The wear ratio is 100% when the wide regions are worn to the bottoms of the sipes. In Table 1, Embodiment (A) is the pneumatic tire of embodiment 1-1, and Embodiment (B) is the pneumatic tire of embodiment 1-1 wherein the dimension H2 of the block is 11.5 mm.

Embodiment (C) is the pneumatic tire of embodiment 1-2, and Embodiment (D) is the pneumatic tire of embodiment 1-3. The conventional example is a pneumatic tire similar to embodiment 1-1 but wherein the dimension H2 of the block is 12 mm, i.e., there is no difference between the tread surfaces of the block when the tire is new. The comparative example is a pneumatic tire similar to embodiment 1-1 but wherein the dimension of the block H2 is 7.5 mm. Embodiment (E) is the pneumatic tire of embodiment 1-4.

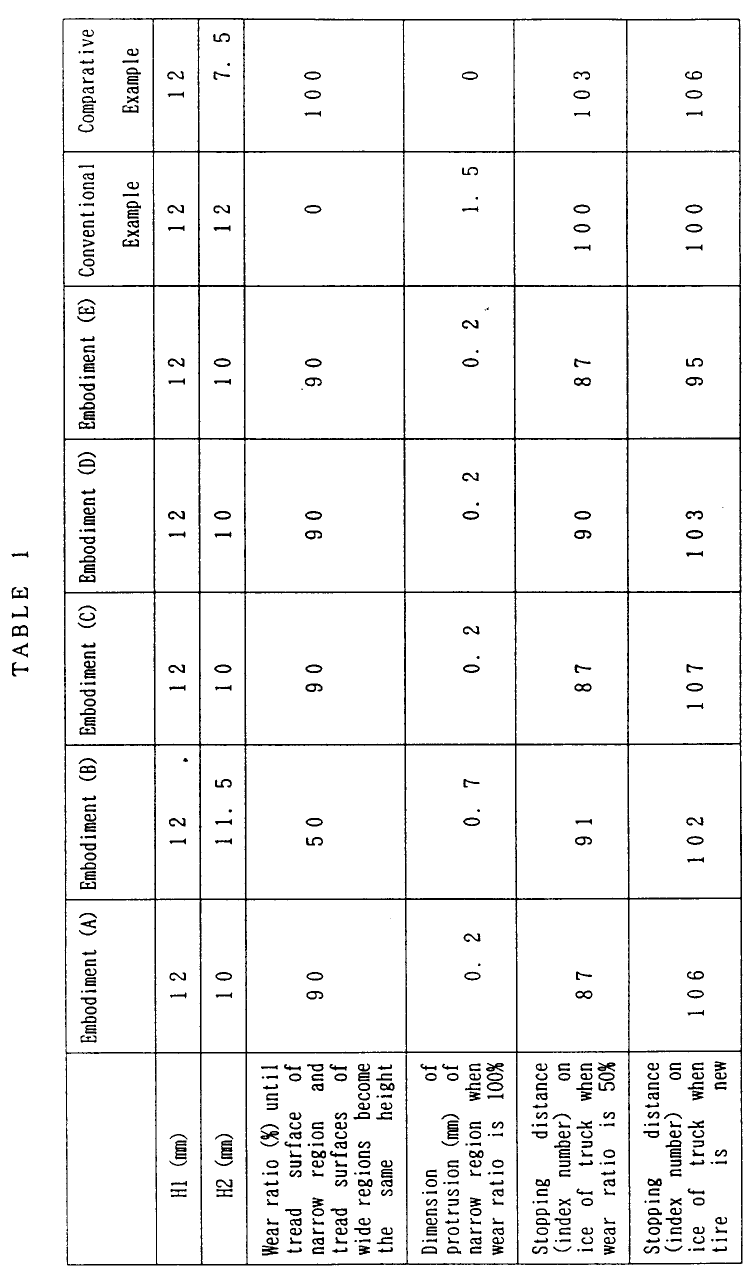

As can be seen from the experimental results given in Table 1, the protruding of the narrow region of the pneumatic tires 10 of the Embodiments (A) to (E) is controlled. As a result, after the blocks have been worn to 50% of the depths of the sipes, the stopping distance of a vehicle equipped with said pneumatic tires 10 is shorter than the stopping distance of a vehicle equipped with conventional pneumatic tires.

## Claims

1. A pneumatic tire comprising a plurality of blocks, each having a narrow region (16) interposed between a set of two sipes (14) which extend substantially transversely of the tire and wide regions (18) disposed respectively at both sides of the narrow region (16), beyond the sipes (14), wherein the average distance H2 from a tire tread surface (16A) of the narrow region (16) to the bottom (14A) of each sipe (14) is less than the average distance H1 from a tire tread surface (18A) of the adjacent wide region (18) to the bottom (14A) of the sipe (14), and wherein an expanded portion (105) is provided at the bottom (14A) of each sipe (14).

2. A pneumatic tire according to claim 1, wherein the ratio H2/H1 of the average distance H2 from the tire tread surface (16A) of the narrow region (16) to the bottom (14A) of each sipe (14) to the average distance H1 from the tire tread surface (18A) of the adjacent wide region (18) to the bottom (14A) of the sipe (14) satisfies the relationship 0.55≦ H2/H1<1.

3. A pneumatic tire according to claim 2, wherein 0.6≦H2/H1≦0.85.

4. A pneumatic tire according to any preceding claim, wherein the ratio L/TS of the shortest distance L between the expanded portions (105) to the average length TS of the narrow region (16) in the circumferential direction of the tire satisfies the relationship 0.7≦L/TS≦1.5.

5. A pneumatic tire according to any preceding claim, wherein the ratio W2/W1 of the length W2 of the narrow region (16) in the transverse direction of the tire to the length W1 of each wide region (18) in the transverse direction of the tire satisfies the relationship 0.50≦W2/W1≦0.95.

6. A pneumatic tire according to any preceding claim, wherein the length (TS2), in the circumferential direction of the tire, of at least one side end portion of the narrow region (16) is longer than the length (TS1), in the circumferential direction of the tire, of a central portion of the narrow region (16).

7. A pneumatic tire according to any preceding claim including blocks having at least one auxiliary sipe (30) in each of the wide regions (18).

8. A pneumatic tire according to claim 7, wherein the auxiliary sipe (30) is substantially parallel to the set of sipes (14).

9. A pneumatic tire according to any preceding claim, including blocks having at least one sipe (20) formed along the circumferential direction of the tire in each of the wide regions (18).

## Patentansprüche

1. Luftreifen, der eine Vielzahl von Blöcken aufweist, von denen jeder ein schmales Gebiet (16) hat, das zwischen einer Gruppe von zwei Einschnitten (14) angeordnet ist, die sich im wesentlichen quer zu des Reifen erstrecken, und breite Gebiete (18) hat, die auf beiden Selten des schmalen Gebietes (16) jenseits der Einschnitte (14) angeordnet sind, wobei der mittlere Abstand H2 von einer Reifenlaufflächen-Oberfläche (16A) des schmalen Gebietes (16) bis zu dem Boden (14A) jedes Einschnitts (14) kleiner ist als der mittlere Abstand H1 von einer Reifenlaufflächen-Oberfläche (18A) des angrenzenden breiten Gebietes (18) bis zu des Boden (14A) des Einschnitts (14), und wobei ein expandierter Bereich (105) auf dem Boden (14A) jedes Einschnitts (14) vorgesehen ist.

2. Luftreifen gemäß Anspruch 1, wobei das Verhältnis H2/H1 des mittleren Abstandes H2 von der Reifenlaufflächen-Oberfläche (16A) des schmalen Giebietes (16) bis zu dem Boden (14A) jedes Einschnitts (14) zu dem mittleren Abstand H1 von der Reifenlaufflächen-Oberfläche (18A) des angrenzenden breiten Gebietes (18) bis zu dem Boden (14A) des Einschnitts (14) die Beziehung 0,55 ≤ H2/H1 < 1 erfüllt.

3. Luftreifen gemäß Anspruch 2, bei dem die Beziehung 0,6 ≤ H2/H1 ≤ 0,85 erfüllt wird.

4. Luftreifen gemäß irgendeinem vorhergehenden Anspruch, wobei das Verhältnis L/TS des kürzesten Abstandes L zwischen den expandierten Bereichen (105) zu der mittleren Länge TS des schmalen Gebietes (16) in der Umfangsrichtung des Reifens die Beziehung 0,7 ≤ L/TS ≤ 1,5 erfüllt.

5. Luftreifen gemäß irgendeinem vorhergehenden Anspruch, wobei das Verhältnis W2/W1 der Länge W2 des schmalen Gebietes (16) in der Querrichtung des Reifens zu der Länge W1 jedes breiten Gebietes (18) in der Querrichtung des Reifens die Beziehung 0,50 ≤ W2/W1 ≤ 0,95 erfüllt.

6. Luftreifen gemäß irgendeinem vorhergehenden Anspruch, wobei die Länge (TS2), in der Umfangsrichtung des Reifens, von mindestens eines Seitenrandbereich des schmalen Gebietes (16) größer ist als die Länge (TS1), in der Umfangsrichtung des Reifens, eines mittleren Bereichs des schmalen Gebietes (16).

7. Luftreifen gemäß irgendeinem vorhergehenden Anspruch, wobei der Luftreifen Blöcke umfaßt, die mindestens einen Hilfseinschnitt (30) in jedem der breiten Gebiete (18) haben.

8. Luftreifen gemäß Anspruch 7, wobei der Hilfseinschnitt (30) im wesentlichen parallel zu der Gruppe von Einschnitten (14) ist.

9. Luftreifen gemäß irgendeinem vorhergehenden Anspruch, wobei der Luftreifen Blöcke umfaßt, die mindestens einen Einschnitt (20) haben, der in der Umfangsrichtung des Reifens In jedem der breiten Gebiete (18) gebildet ist.

## Revendications

1. Bandage pneumatique comprenant plusieurs blocs, comportant chacun une région étroite (16), agencée entre un groupe de deux lamelles (14), s'étendant de façon pratiquement transversale par rapport au pneumatique, et des régions larges (18), agencées respectivement au niveau des deux côtés de la région étroite (16), au-delà des lamelles (14), dans lequel la distance moyenne H2 entre une surface de la bande de roulement (16A) du pneumatique de la région étroite (16) et le fond (14A) de chaque lamelle (14) est inférieure à la distance moyenne H1 entre une surface de la bande de roulement (18A) du pneumatique de la région large adjacente (18) et le fond (14A) de la lamelle (14), et dans lequel une partie étendue (105) est agencée au fond (14A) de chaque lamelle (14).

2. Bandage pneumatique selon la revendication 1, dans lequel le rapport H2/H1 entre la distance moyenne H2, séparant la surface de le bande de roulement (16A) du pneumatique de la région étroite (16) du fond (14A) de chaque lamelle (14), et la distance moyenne H1, séparant la surface de la bande de roulement (18A) du pneumatique de la région large adjacente (18), et le fond (14A) de la lamelle (14) satisfait à la relation 0,55 ≤ H2/H1 < 1.

3. Bandage pneumatique selon le revendication 2, dans lequel 0,6 ≤ H2/H1 ≤ 0,85.

4. Bandage pneumatique selon l'une quelconque des revendications précédentes, dans lequel le rapport L/TS entre la distance la plus courte L entre les parties étendues (105) et la longueur moyenne TS de la région étroite (16) dans la direction circonférentielle du pneumatique satisfait à la relation 0,7 ≤ L/TS ≤ 1,5.

5. Bandage pneumatique selon l'une quelconque des revendications précédentes, dans lequel le rapport W2/W1 entre la longueur W2 de la partie étroite (16) dans la direction transversale du pneumatique et le longueur W1 de chaque région large (18) dans la direction transversale du pneumatique satisfait à la relation 0,50 ≤ W2/W1 ≤ 0,95.

6. Bandage pneumatique selon l'une quelconque des revendications précédentes, dans lequel la longueur (TS2) dans le direction circonférentielle du pneumatique d'au moins une partie d'extrémité latérale de la région étroite (16) est supérieure à la longueur (TS1) dans la direction circonférentielle du pneumatique d'une partie centrale de la région étroite (16).

7. Bandage pneumatique selon l'une quelconque des revendications précédentes, englobant des blocs comportant au moins une lamelle auxiliaire (30) dans chacune des régions larges (18).

8. Bandage pneumatique selon la revendication 7, dans lequel la lamelle auxiliaire (30) est pratiquement parallèle au groupe de lamelles (14).

9. Bandage pneumatique selon l'une quelconque des revendications précédentes, englobant des blocs comportant au moins une lamelle (20) formée le long de la direction circonférentielle du pneumatique dans chacune des régions larges (18).
